# FASCICULE DE BREVET EUROPEEN

(11) **EP 2 428 394 B1**
(45) Date de publication et mention de la délivrance du brevet: **27.07.2016**
(21) Numéro de dépôt: 11180510.7
(22) Date de dépôt: 08.09.2011
(51) Int. Cl.: B60N 2/28

(54) **Siège de sécurité pour enfant destiné à être fixé de manière amovible dans un véhicule automobile**
Kindersicherheitssitz zum lösbaren Befestigen in einem Kraftfahrzeug
Child safety seat to be removably attachable in a vehicle

(30) Priorité: 15.10.2010 FR 1058415; 09.09.2010 FR 1057178
(43) Date de publication de la demande: 14.03.2012
(73) Titulaire: Nania, M. Yves, 38460 Villemoirieu (FR)
(72) Inventeur: Nania, M. Yves, 38460 Villemoirieu (FR)
(74) Mandataire: Gasquet, Denis

(56) Documents cités:
- EP-A2- 1 997 672
- JP-A- 2007 131 105

## Description

La présente invention concerne un siège de sécurité pour enfant destiné à être fixé de manière amovible dans un véhicule automobile. Elle concerne plus particulièrement un perfectionnement permettant de fixer un siège de type groupe 0+ /1, soit dans son utilisation du siège de type groupe 0, soit le même siège dans son utilisation du type groupe 1.

Il existe des sièges pour les enfants de la naissance à 13 kg qui sont appelés siège de type Groupe 0, mais il existe aussi des sièges pouvant être utilisés pour des enfants depuis la naissance jusqu'à 18 kg. Ces derniers sont alors du type Groupe 0+/1 et sont constitués d'un baquet monté sur une embase pour pouvoir être incliné, pour être basculé de façon à ce que l'enfant puisse être en position soit verticale, soit en position semi-allongée. Ce siège, lorsque l'enfant pèse plus de 13 kg est placé dans le véhicule face à la route, le baquet étant redressé, tandis que lorsque l'enfant pèse moins de 13 kg ce dernier doit être placé dos à la route, le baquet étant mis en position allongée, pour plus de confort et de sécurité pour l'enfant.

On connaît aussi des sièges d'enfants munis de moyens de fixation dits "ISOFIX". Ces moyens sont normalisés par la norme ISO WG 13216, et sont constitués par des verrous associés au siège destinés à coopérer avec des moyens d'accrochage, constitués par des étriers fixés au siège du véhicule à la partie basse du dossier, dans l'espace situé entre l'assise du siège et son dossier.

On connaît ainsi les sièges divulgués par les demandes internationales de brevet WO 2005/087535, WO 2006/037751, WO 2007/061716, WO 2008/147231, mais aussi par les demandes de brevet européenne, EP 1 852 300, EP 0 619 202, voire la demande de brevet français FR 2 870 498.

On connaît aussi par la divulgation faite par le brevet JP 2007 131105 A,un siège de sécurité pour enfant destiné à être fixé de manière amovible dans un véhicule automobile, ledit siège comprenant un baquet monté sur une embase, comprenant des moyens permettant de fixer un siège de type groupe 0+/1, soit selon son utilisation de type groupe 0, l'enfant étant placé dos à la route, soit le même siège selon son utilisation du type groupe 1, l'enfant étant placé face à la route, et ce par le système dit "ISOFIX". Le siège divulgué comprend deux verrous disposés à l'arrière du siège de sécurité destinés à coopérer avec des moyens d'accrochage, constitués par deux étriers d'accrochage fixés au siège du véhicule à la partie basse du dossier, dans l'espace situé entre l'assise du siège et son dossier, et deux verrous disposés à l'avant dudit siège de sécurité destinés à coopérer avec les moyens d'accrochage, constitués par les deux étriers d'accrochage. Ce dispositif ne comporte pas de système d'escamotage des tiges sur lesquelles sont montés les verrous d'accrochage. Le document EP 1 997 672 A2,divulge un siège de sécurité pour enfant destiné à être fixé de manière amovible dans un véhicule automobile qui ne prévoit pas la possibilité de proposer un dispositif permettant de fixer le siège selon son utilisation de type groupe 0, l'enfant étant placé dos à la route, soit le même siège selon son utilisation du type groupe 1, l'enfant étant placé face à la route, et ce par le système dit "ISOFIX".

Les sièges d'enfants du groupe 0+ /1, ne peuvent être fixés dans le véhicule par les moyens de type "ISOFIX" que dans le cas d'une utilisation face à la route, et rien n'est prévu pour le fixer dos à la route à part avec les moyens traditionnels, c'est-à-dire les sangles de retenue.

La présente invention se propose de résoudre les inconvénients des dispositifs connus en proposant un dispositif permettant de fixer un siège de type groupe 0+/1, soit en utilisation du siège de type groupe 0, l'enfant étant placé face à la route, soit le même siège en utilisation du type groupe 1, l'enfant étant placé dos à la route, et ce, par le système dit "ISOFIX".

Ainsi, selon l'invention, ledit siège comprend un baquet monté sur une embase, caractérisé en ce qu'il comprend des moyens permettant de fixer un siège de type groupe 0+ /1, soit en utilisation du siège de type groupe 0, l'enfant étant placé face à la route, soit le même siège en utilisation du type groupe 1, l'enfant étant placé dos à la route, et ce par le système dit "ISOFIX".

Selon l'invention le siège comprend deux verrous arrière disposés à l'arrière du siège de sécurité destinés à coopérer avec des moyens d'accrochage, constitués par deux étriers d'accrochage fixés au siège du véhicule à la partie basse du dossier, dans l'espace situé entre l'assise du siège et son dossier, et deux verrous avant disposés à l'avant dudit siège de sécurité destinés à coopérer avec les moyens d'accrochage, constitués par les deux étriers d'accrochage.

Selon l'invention les deux verrous sont disposés à l'extrémité de deux tiges arrière escamotables correspondantes montées coulissantes dans la partie basse de l'embase, pour que les verrous fassent saillie hors de la partie arrière de l'embase, tandis que deux verrous avant sont disposés à l'extrémité de deux tiges avant escamotables correspondantes montées coulissantes dans la partie basse de l'embase, pour que les verrous fassent saillie hors de la partie avant de l'embase, le coulissement des deux tiges escamotables arrière et avant permettent à celles-ci de prendre deux positions, une position extractée permettant l'accrochage du siège de sécurité, et une position escamotée active de retenue du siège. Ajoutons que
- chacun des verrous porté à l'extrémité de la tige escamotable correspondante est constitué par une pièce pivotante de verrouillage sollicitée en position de verrouillage par un système élastique tel qu'un ressort.
- chacun des étriers d'accrochage, comprend une broche horizontale d'accrochage destinée à venir en prise avec la pièce pivotante afin d'assurer la retenue du siège de sécurité.
- les deux couples de tiges sont verrouillés dans leurs deux positions grâce à un système de verrouillage et de déverrouillage lui aussi connu qui est commandé par une poignée de déverrouillage respectivement.

D'autres caractéristiques et avantages de l'invention se dégageront de la description qui va suivre en regard des dessins annexés qui ne sont donnés qu'à titre d'exemple non limitatif.

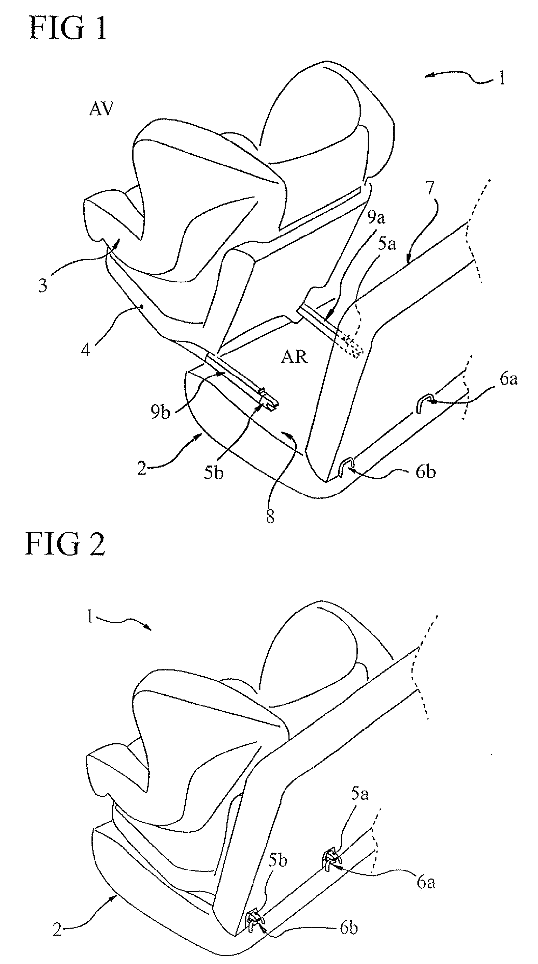

Les figures 1 et 2 sont des vues en perspective montrant le siège de sécurité en utilisation selon le groupe 1, position selon laquelle l'enfant est face à la route.
La figure 1 montre le siège de sécurité en cours d'installation sur le siège du véhicule.
La figure 2 montre le siège de sécurité une fois fixé sur le siège du véhicule.
Les figures 3 et 4 sont des vues en perspective montrant le siège de sécurité en utilisation selon le groupe 0, position selon laquelle l'enfant est placé dos à la route.

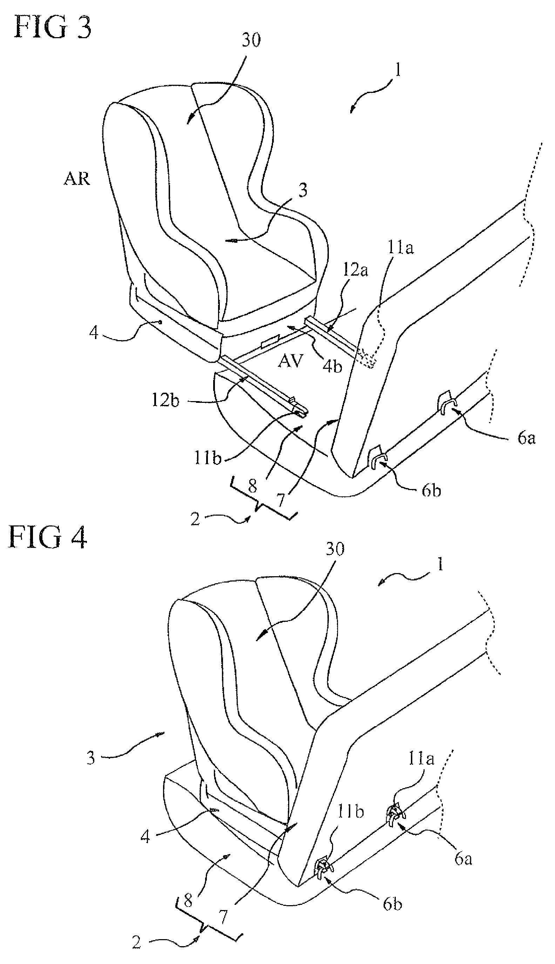

La figure 3 montre le siège de sécurité en cours d'installation sur le siège du véhicule.
La figure 4 montre le siège de sécurité une fois fixé sur le siège du véhicule.

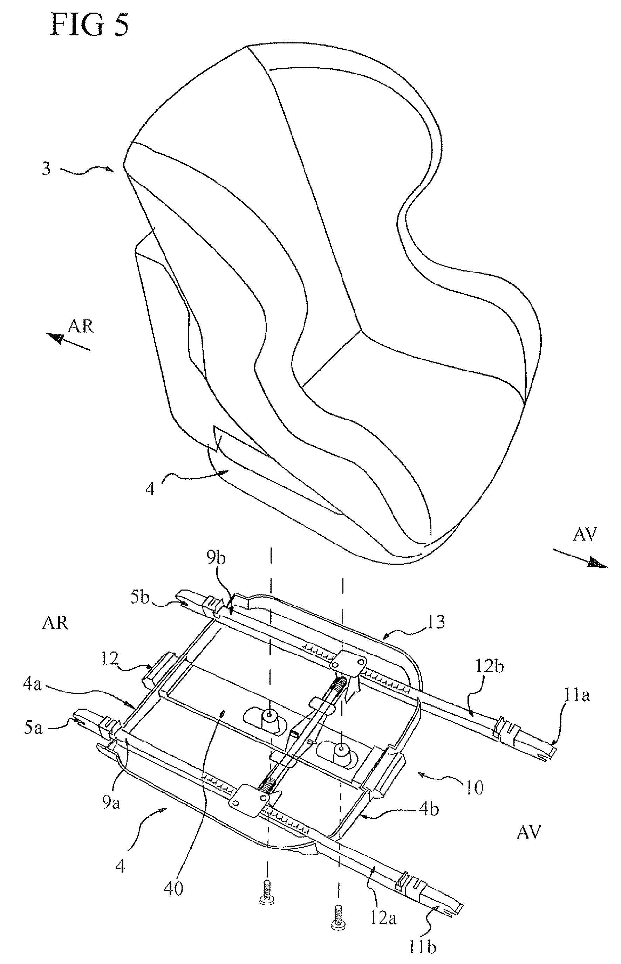

La figure 5 est une vue en perspective du siège avec la partie basse de l'embase désolidarisée, les deux paires de tiges escamotables destinées à fixer le siège dos à la route, étant dans leur position extractée tel qu'illustré à la figure 3.

Le siège de sécurité pour enfant portant la référence générale (1) est destiné à être fixé sur le siège (2) d'un véhicule automobile. Le siège pour l'enfant (1) est selon la présente invention du type dit Groupe 0+ /1, c'est-à-dire qu'il peut être utilisé pour des enfants depuis la naissance jusqu'à 18 kg. Le siège de sécurité est alors constitué d'un baquet (3) monté sur une embase (4). Ce siège, lorsque l'enfant pèse plus de 13 kg est placé dans le véhicule face à la route tel qu'illustré à la figure 2, le baquet (3) étant redressé, son dossier (4) étant en position sensiblement verticale, tandis que lorsque l'enfant pèse moins de 13 kg ce dernier est placé dos à la route tel qu'illustré à la figure 4, le baquet (3) étant mis en position allongé, avec son dossier en position incliné, pour plus de confort et de sécurité pour l'enfant. A cet effet, le baquet (3) est monté de façon connue en soit sur son embase de façon à pouvoir passer d'une position tel que le dossier est en position sensiblement verticale vers une position inclinée telle que définie précédemment et inversement.

Le siège (1) de l'enfant quand il est utilisé en Groupe 1 à savoir dans sa position face à la route (figure 2), comprend des moyens de fixation au siège du véhicule, qui sont des moyens de type ISOFIX, selon la norme ISO WG 13216. A cet effet, ces moyens sont constitués par deux verrous arrière (5a, 5b) disposés à l'arrière (AR) du siège de sécurité (1) destinés à coopérer avec des moyens d'accrochage, constitués par deux étriers d'accrochage (6a, 6b) fixés au siège du véhicule à la partie basse du dossier (7), dans l'espace situé entre l'assise (8) du siège et son dossier.

Les deux verrous arrière (5a, 5b) sont disposés à l'extrémité de deux tiges arrière escamotables correspondantes (9a, 9b) montées coulissantes dans la partie basse (13) de l'embase (4), pour que les verrous fassent saillie hors de la partie arrière (4a) de l'embase. Le coulissement des deux tiges arrière escamotables (9a, 9b) permet à celles-ci de prendre deux positions, une position extractée selon laquelle les deux tiges arrière font saillie vers l'arrière à l'extérieur de l'embase, permettant l'accrochage du siège de sécurité, et une position escamotée active de retenue du siège.

Les moyens d'accrochage ci-dessus mentionnés ne seront pas décrits en détail car connu de l'art antérieur, notons seulement :
- que chacun des verrous porté à l'extrémité de la tige escamotable correspondante est constitué par une pièce pivotante de verrouillage sollicitée en position de verrouillage par un système élastique tel qu'un ressort.
- que chacun des étriers d'accrochage (6a, 6b), comprend une broche horizontale d'accrochage destinée à venir en prise avec la pièce pivotante afin d'assurer la retenue du siège de sécurité.
- que le montage du siège se fait avec les tiges escamotables en position extractée (figure 1), puis en engageant les verrous avec les broches horizontales et ensuite en replaçant les tiges escamotables en position retractée. A cet effet, les deux tiges sont verrouillées dans leurs deux positions grâce à un système de verrouillage et de déverrouillage, lui aussi connu, qui est commandé par une poignée de déverrouillage (10).

Selon l'invention, le siège de sécurité comprend des moyens de fixation de type ISOFIX, pour le fixer au siège du véhicule quand il est en position dos à la route, c'est-à-dire dans une utilisation Groupe 0, pour des enfants en bas âge, tel que cela est illustré à la figure 4.

A cet effet, le siège de sécurité (1) est tel que son embase (4), comprend des moyens de fixation au siège du véhicule, qui sont des moyens de type ISOFIX, selon la norme ISO WG 13216. A cet effet, ces moyens sont constitués par deux verrous avant (11a,11b) disposés à l'avant (AV) dudit siège de sécurité (1) destinés à coopérer avec les moyens d'accrochage, prévus pour fixer le siège quand il est dos à la route en situation de groupe 0. Ces moyens d'accrochage étant, comme nous l'avons précisé précédemment, constitués par les deux étriers d'accrochage (6a, 6b) fixés au siège du véhicule à la partie basse du dossier (7), dans l'espace situé entre l'assise (8) du siège et son dossier.

Comme précédemment, les deux verrous avant (11a,11b) sont disposé à l'extrémité de deux tiges avant escamotables correspondantes (12a, 12b) montées coulissantes dans la partie basse de l'embase (4), pour que les verrous fassent saillie hors de la partie avant (4b) de l'embase. Le coulissement des deux tiges escamotables (11a, 11b) permet à celles-ci de prendre deux positions, une position escamotée active de retenue du siège et une position extractée selon laquelle les deux tiges font saillie vers l'avant hors de l'embase, permettant l'accrochage du siège de sécurité.

On notera, comme précédemment décrit :
- que chacun des verrous porté à l'extrémité de la tige escamotable correspondante est constitué par une pièce pivotante de verrouillage sollicitée en position de verrouillage par un système élastique tel qu'un ressort.
- que chacun des étriers d'accrochage (6a, 6b), comprend une broche horizontale d'accrochage destinée à venir en prise avec la pièce pivotante afin d'assurer la retenue du siège de sécurité.
- que le montage du siège se fait avec les tiges escamotables en position extractée (figure 3), puis en engageant les verrous avec les broches horizontales et ensuite en replaçant les tiges escamotables en position retractée. A cet effet les deux tiges sont verrouillées dans leurs deux positions grâce à un système de verrouillage et de déverrouillage lui aussi connu qui est commandé par une poignée de déverrouillage (12).

Selon un mode de réalisation les deux couples de tiges escamotables arrière (9a, 9b) et avant (12a, 12b) peuvent être solidaires en déplacement soit vers l'arrière pour fixer le siège face à la route (groupe 1) soit vers l'avant pour fixer le siège dos à la route (groupe 0). Ainsi la tige escamotable (9a) serait solidaire de la tige escamotable (12a), et la tige escamotable (9b) serait solidaire de la tige escamotable (12b).

Selon le mode préféré de l'invention, le couple de tiges escamotables arrière (9a, 9b) est indépendant en déplacement longitudinal du couple de tiges avant escamotables (12a, 12b).

La figure 5 illustre en bas de page la partie basse (13) de l'embase (4). Sur cette figure, on constate que les deux paires de tiges escamotables comprennent chacune une denture destinée à coopérer avec un verrou commandé par le déplacement d'une pièce de commande (40) mobile en déplacement longitudinal, activée en déplacement par l'une ou l'autre des poignées de déverrouillage (10, 12).

On a compris notamment grâce à la figure 5, que le verrouillage et le déverrouillage des tiges escamotables se fait grâce à deux verrous transversaux coulissant, dont l'extrémité coopère avec les dentures correspondantes des tiges escamotables, chacun des verrous transversaux étant sollicité par un système élastique tel qu'un ressort, pour être sollicité en engagement dans les dentures correspondantes.

Précisons que la pièce de commande (40) est une plaque longitudinale coulissante dans l'embase, dont l'extrémité avant comprend une des poignées de déverrouillage (10) dont la commande permet l'extraction des tiges arrière escamotable (9a, 9b), tandis que son extrémité arrière comprend l'autre poignée de déverrouillage (12) dont la commande permet l'extraction des tiges avant escamotables (11a, 11b).

Dans son déplacement longitudinal, la pièce de commande (40) qui est déplacée, grâce à la poignée, soit vers l'arrière soit vers l'avant déplace les deux verrous vers l'intérieur contre l'action des ressorts, et libère ainsi par désengagement des dentures les tiges escamotables qui peuvent être ainsi extractées ;

Précisons que la pièce de commande (40) est reliée aux verroux transversaux pour assurer leur déplacement.

On a compris que grâce au dispositif de l'invention, le siège de sécurité groupe 0+ /1 peut être fixé au siège du véhicule, avec le système ISOFIX quelle que soit son utilisation, en groupe 1 ou en groupe 0.

## Revendications

1. Siège de sécurité (1) pour enfant destiné à être fixé de manière amovible dans un véhicule automobile, ledit siège comprenant un baquet (3) monté sur une embase (4), comprenant des moyens permettant de fixer un siège de type groupe 0+ /1, soit selon son utilisation de type groupe 0, l'enfant étant placé dos à la route, soit le même siège selon son utilisation du type groupe 1, l'enfant étant placé face à la route, et ce par le système dit "ISOFIX", tandis que le siège (1) comprend deux verrous arrière (5a, 5b) disposés à l'arrière (AR) du siège de sécurité (1) destinés à coopérer avec des moyens d'accrochage, constitués par deux étriers d'accrochage (6a, 6b) fixés au siège du véhicule à la partie basse du dossier (7), dans l'espace situé entre l'assise (8) du siège et son dossier, et deux verrous avant (11a,11b) disposés à l'avant (AV) dudit siège de sécurité (1) destinés à coopérer avec les moyens d'accrochage, constitués par les deux étriers d'accrochage (6a, 6b), **caractérisé en ce que** les deux verrous (5a, 5b) sont disposés à l'extrémité de deux tiges arrière escamotables correspondantes (9a, 9b) montées coulissantes dans la partie basse de l'embase (4), pour que les verrous fassent saillie hors de la partie arrière (4a) de l'embase, tandis que les deux verrous avant (11a, 11b) sont disposés à l'extrémité de deux tiges avant escamotables correspondantes (12a, 12b) montées coulissantes dans la partie basse de l'embase (4), pour que ces verrous (11a, 11b) fassent saillie hors de la partie avant (4b) de l'embase, le coulissement des deux tiges escamotables arrière (9a, 9b) et avant (12a, 12b) permettent à celles-ci de prendre deux positions, à savoir une position extractée permettant l'accrochage du siège de sécurité, et une position escamotée active de retenue du siège.

2. Siège de sécurité (1) pour enfant selon la revendication précédente, **caractérisé en ce que** les deux couples de tiges escamotables arrière avant (9a, 9b) et avant (12a, 12b) sont solidaires en déplacement soit vers l'arrière pour fixer le siège face à la route (groupe 1) soit vers l'avant pour fixer le siège dos à la route (groupe 0), de façon à ce que la tige escamotable (9a) soit solidaire en déplacement de la tige escamotable (12a), et que la tige escamotable (9b) soit solidaire en déplacement de la tige escamotable (12b).

3. Siège de sécurité (1) pour enfant selon la revendication 1, **caractérisé en ce que** le couple de tiges escamotables arrière (9a, 9b) est indépendant en déplacement longitudinal du couple de tiges avant escamotables (12a, 12b).

4. Siège de sécurité (1) pour enfant selon l'une quelconque des revendications précédentes, **caractérisé en ce que** les deux paires de tiges escamotables comprennent chacune une denture destinée à coopérer avec un verrou commandé par le déplacement d'une pièce de commande (40) mobile en déplacement longitudinal, activée en déplacement par une poignée de déverrouillage (10,12).

5. Siège de sécurité (1) pour enfant selon la revendication précédente, **caractérisé en ce que**
- chacun des verrous (5a, 5b- 11a, 11b) porté à l'extrémité de la tige escamotable correspondante (9a, 9b - 12a, 12b) est constitué par une pièce pivotante de verrouillage sollicitée en position de verrouillage par un système élastique tel qu'un ressort.
- chacun des étriers d'accrochage (6a, 6b), comprend une broche horizontale d'accrochage destinée à venir en prise avec la pièce pivotante afin d'assurer la retenue du siège de sécurité.
- les deux couples de tiges (9a, 9b) et (12a, 12b) sont verrouillées dans leurs deux positions grâce à un système de verrouillage et de déverrouillage qui est commandé par une poignée de déverrouillage respectivement (10,12).

## Patentansprüche

1. Sicherheitssitz (1) für ein Kind, der dazu bestimmt ist, in einem Kraftfahrzeug lösbar befestigt zu werden, wobei der genannte Sitz eine Sitzschale (3) aufweist, die auf einem Sockel (4) montiert ist, ausgerüstet mit Mitteln für die Befestigung eines Sitzes vom Typ der Gruppe 0+ /1, wobei bei seiner Verwendung als Typ der Gruppe 0 das Kind mit dem Rücken zur Fahrtrichtung platziert wird, oder bei der Verwendung desselben Sitzes als Typ der Gruppe 1 das Kind in Fahrtrichtung platziert wird und dies anhand des so genannten "ISOFIX"-Systems, während der Sitz (1) zwei hintere Riegel (5a, 5b) aufweist, die an der Rückseite (AR) des Sicherheitssitzes (1) angeordnet sind und dafür bestimmt sind, mit Haltemitteln zusammenzuwirken, bestehend aus zwei Haltebügeln (6a, 6b), die am Sitz des Fahrzeugs im unteren Teil der Rückenlehne (7) in dem Raum zwischen der Sitzfläche (8) des Sitzes und seiner Rückenlehne befestigt sind, und zwei vorderen Riegeln (11a, 11b), die an der Vorderseite (AV) des genannten Sicherheitssitzes (1) angeordnet und dazu bestimmt sind, mit den Haltemitteln zusammenzuwirken, bestehend aus den beiden Haltebügeln (6a, 6b), **dadurch gekennzeichnet, dass** die beiden Riegel (5a, 5b) am Ende von zwei entsprechenden ausziehbaren Stangen (9a, 9b) angeordnet sind, die verschiebbar im unteren Teil des Sockels (4) angebracht sind, damit die Riegel über den hinteren Teil (4a) des Sockels vorstehen, während die beiden vorderen Riegel (11a, 11b) am Ende von zwei entsprechenden, ausziehbaren vorderen Stangen (12a, 12b) angeordnet sind, die verschiebbar im unteren Teil des Sockels (4) angebracht sind, damit diese Riegel (11a, 11b) über den vorderen Teil (4b) des Sockels vorstehen, wobei das Verschieben der beiden ausziehbaren hinteren Stangen (9a, 9b) und vorderen Stangen (12a, 12b) diesen die Möglichkeit bietet, zwei Positionen einzunehmen, nämlich eine ausgezogene Position, die das Befestigen des Sicherheitssitzes erlaubt, und eine eingeschobene, aktive Position für das Halten des Sitzes.

2. Sicherheitssitz (1) für ein Kind nach dem voranstehenden Anspruch, **dadurch gekennzeichnet, dass** die beiden Paare von ausziehbaren hinteren (9a, 9b) und vorderen (12a, 12b) Stangen fest angebracht sind, für die Verschiebung nach hinten zur Befestigung des Sitzes in Fahrtrichtung (Gruppe 1) oder nach vorn zur Befestigung des Sitzes entgegen der Fahrtrichtung (Gruppe 0), so dass die ausziehbare Stange (9a) fest angebracht ist für das Verschieben der ausziehbaren Stange (12a) und die ausziehbare Stange (9b) fest angebracht ist für das Verschieben der ausziehbaren Stange (12b).

3. Sicherheitssitz (1) für ein Kind nach Anspruch 1, **dadurch gekennzeichnet, dass** das Paar von hinteren ausziehbaren Stangen (9a, 9b) unabhängig von einer Verschiebung in Längsrichtung des vorderen Paares von ausziehbaren Stangen (12a, 12b) ist.

4. Sicherheitssitz (1) für ein Kind nach einem der voranstehenden Ansprüche, **dadurch gekennzeichnet, dass** die beiden Paare von ausziehbaren Stangen jeweils eine Verzahnung aufweisen, die dafür bestimmt ist, mit einem Riegel zusammenzuwirken, der durch die Verschiebung eines Bedienelements (40) betätigt wird, das in Längsrichtung beweglich ist und dessen Verschiebung mit einem Entriegelungshandgriff (10, 12) betätigt wird.

5. Sicherheitssitz (1) für ein Kind nach dem voranstehenden Anspruch, **dadurch gekennzeichnet, dass**
- jeder der Riegel (5a, 5b - 11a, 11b), der am Ende der entsprechenden ausziehbaren Stange (9a, 9b - 12a, 12b) getragen ist, aus einem drehbaren Verriegelungsteil besteht, das anhand eines elastischen Systems, wie z.B. einer Feder, in verriegelter Position gehalten wird;
- jeder der Haltebügel (6a, 6b) ein horizontales Befestigungsteil aufweist, das dazu bestimmt ist, mit dem drehbaren Teil zusammenzuwirken, um das Halten des Sicherheitssitzes zu gewährleisten;
- die beiden Stangenpaare (9a, 9b) und (12a, 12b) in ihren beiden Positionen dank eines Verriegelungs- und Entriegelungssystems verriegelt werden, das durch einen jeweiligen Entriegelungshandgriff (10, 12) betätigt wird.

## Claims

1. Child safety seat (1) intended to be removably fixed in a motor vehicle, said seat comprising a bucket seat (3) mounted on a base (4), comprising means enabling a seat of group 0+/1 type to be fixed, either according to its group 0 type use, the child being placed rearward facing, or the same seat according to its group 1 type use, the child being placed forward facing, and by the so-called "ISOFIX" system, while the seat (1) comprises two rear latches (5a, 5b) arranged at the rear (AR) of the safety seat (1) and intended to cooperate with attachment means formed by two attachment stirrups (6a, 6b) fixed to the vehicle seat at the bottom part of the seat back (7), in the space situated between the seat cushion (8) and the seat back, and two front latches (11a, 11b) arranged at the front (AV) of said safety seat (1) and intended to cooperate with the attachment means formed by the two attachment stirrups (6a, 6b), **characterised in that** the two latches (5a, 5b) are arranged at the end of two corresponding retractable rear rods (9a, 9b) mounted slidably in the bottom part of the base (4), so that the latches project from the rear part (4a) of the base, while the two front latches (11a, 11b) are arranged at the end of two corresponding retractable front rods (12a, 12b) slidably mounted in the bottom part of the base (4), so that these latches (11a, 11b) project from the front part (4b) of the base, the sliding of the two rear retractable rods (9a, 9b) and front retractable rods (12a, 12b) enable these rods to assume two positions, namely an extended position enabling the attachment of the safety seat, and an active retracted position for retention of the seat.

2. Child safety seat (1) according to the preceding claim, **characterised in that** the two pairs of rear retractable rods (9a, 9b) and front retractable rods (12a, 12b) are interdependent in displacement either rearwards to fix the seat forward facing (group 1) or forwards to fix the seat rearward facing (group 0), so that the retractable rod (9a) is interdependent in displacement with the retractable rod (12a), and the retractable rod (9b) is interdependent in displacement with the retractable rod (12b).

3. Child safety seat (1) according to claim 1, **characterised in that** the pair of rear retractable rods (9a, 9b) is independent in longitudinal displacement from the pair of front retractable rods (12a, 12b).

4. Child safety seat (1) according to any one of the preceding claims, **characterised in that** the two pairs of retractable rods each comprise a toothing intended to cooperate with a latch controlled by the displacement of a control part (40) movable in longitudinal displacement, activated in displacement by an unlocking handle (10, 12).

5. Child safety seat (1) according to the preceding claim, **characterised in that**
- each of the latches (5a, 5b - 11a, 11b) carried at the end of the corresponding retractable rod (9a, 9b - 12a, 12b) is formed by a pivotable locking part biased into locking position by a resilient system such as a spring;
- each of the attachment stirrups (6a, 6b) comprises a horizontal attachment pin intended to engage with the pivotable part so as to ensure the retention of the safety seat;
- the two pairs of rods (9a, 9b) and (12a, 12b) are locked in their two positions by means of a locking and unlocking system which is controlled by a respective unlocking handle (10, 12).
